# FASCICULE DE BREVET EUROPEEN

(11) **EP 0 633 673 B1**
(45) Date de publication et mention de la délivrance du brevet: **21.03.2001**
(21) Numéro de dépôt: 94401454.7
(22) Date de dépôt: 28.06.1994
(51) Int. Cl.: H04B 11/00, H04B 13/02

(54) **Procédé de transmission acoustique sous-marine et dispositif pour l'amélioration de l'intelligibilité de telles transmissions**
Verfahren zur akustischen unterseeischen Übertragung und Vorrichtung zum Verbessern der Verständlichkeit von solchen Übertragungen
Method of acoustic undersea transmission and device to improve intelligibility of such transmissions

(30) Priorité: 06.07.1993 FR 9308267
(43) Date de publication de la demande: 11.01.1995
(73) Titulaire: SAFARE-CROUZET Société Anonyme, F-06100 Nice (FR)
(72) Inventeur: Troin, Georges, F-06370 Mouans-Sartoux (FR); Cazaoulou, Claude, F-06000 Nice (FR)
(74) Mandataire: Geismar, Thierry

(56) Documents cités:
- FR-A- 2 341 234
- US-A- 3 860 760
- US-A- 4 276 624
- US-A- 4 562 559
- US-A- 5 136 613

## Description

La présente invention concerne un procédé de transmission acoustique sous-marine et un dispositif pour l'amélioration de l'intelligibilité de telles transmissions.

On sait que les communications sous-marines, par exemple d'un navire de surface à un sous-marin ou à un plongeur, utilisent des moyens de transmission acoustiques.

L'intelligibilité de ces transmissions se trouve malheureusement très vite dégradée lorsque le milieu de propagation est générateur de chemins multiples par réflexion du signal sur différents obstacles tels que le fond ou la surface, ce qui produit des échos, ou lorsque l'émetteur et le récepteur se déplacent avec une composante radiale non nulle ce qui entraîne un glissement de fréquence par effet Doppler.

Toutefois, ces deux effets, échos et glissement en fréquence, sont naturellement compensés par le cerveau humain lorsqu'ils sont d'ampleur et d'intensité limitées. En fait, l'oreille humaine tolère des échos ou des étalements de temps dans la mesure où ils sont inférieurs à 50 millisecondes.

La présente invention vise donc à fournir un procédé et un dispositif utilisables dans le domaine des transmissions acoustiques sous-marines, permettant de ramener les effets d'échos et Doppler en-dessous du seuil de tolérance de l'oreille humaine.

A cet effet, l'invention a tout d'abord pour objet un procédé de transmission acoustique sous-marine, caractérisé par le fait qu'à l'émission, le signal à émettre est préalablement échantillonné, numérisé et mémorisé, puis déséchantillonné et dénumérisé à une fréquence inférieure à la fréquence d'échantillonnage et ainsi émis sous forme analogique, et qu'à la réception, le signal est de façon correspondante échantillonné, numérisé et mémorisé à la fréquence précitée de déséchantillonnage et de dénumérisation puis relu à la fréquence précitée d'échantillonnage.

Il résulte du procédé selon l'invention un étalement temporel du signal émis et une compression inverse du signal reçu. On a constaté que cet étalement à l'émission et cette compression à la réception diminuaient dans une large mesure les phénomènes d'échos et amélioraient de façon considérale l'intelligibilité des messages transmis. On peut penser que l'étalement temporel à l'émission, qui se traduit par une concentration du spectre d'énergie dans une bande de fréquences étroite, provoque dans cette bande étroite une augmentation du rapport signal/bruit.

En outre, le procédé permettant l'enregistrement des messages à l'émission comme à la réception, offre d'une part la possibilité de vérification de la qualité du message à transmettre avant toute opération d'émission et, d'autre part, la possibilité de réécoutes multiples du message reçu. Ces réécoutes multiples contribuent également à l'amélioration de l'intelligibilité par auto-adaptation progressive de l'oreille de l'opérateur qui peut, dans une certaine mesure, extraire le message utile du bruit et des perturbations.

La sécurité obtenue dans la qualité du message transmis permet de plus, indirectement, une amélioration de la discrétion de l'émetteur et du récepteur, discrétion particulièrement recherchée dans certaines applications de la transmission acoustique sous-marine.

Dans un mode de réalisation particulier de l'invention, le signal émis est, postérieurement à sa dénumérisation, transposé en fréquence dans une bande compatible avec l'émetteur, par exemple par modulation d'une porteuse et émission en bande latérale unique.

De même, dans un mode de mise en oeuvre particulier du procédé selon l'invention, le signal reçu est, préalablement à son échantillonnage et à sa numérisation, transposé en fréquence dans une bande compatible avec les moyens de mémorisation, par exemple par modulation d'une porteuse, une seule bande latérale en résultant étant ensuite échantillonnée et numérisée.

Egalement dans un mode de réalisation particulier, le signal relu est utilisé pour moduler une porteuse, une bande latérale en résultant formant le signal reconstitué.

Dans ce dernier cas, la fréquence de la porteuse est de préférence réglable afin de corriger le glissement en fréquence dû à l'effet Doppler.

Un tel procédé de modulation et de filtrage aussi bien à l'émission qu'à la réception et lors de la relecture, permet, d'une part, la mise en oeuvre de l'invention à l'aide de n'importe quel moyen de transmission traditionnel sans avoir à en modifier la bande passante ou les caractéristiques de dynamique et, d'autre part, l'accès libre à la correction de l'effet Doppler par l'opérateur lors de la réécoute.

L'invention a également pour objet un dispositif pour l'amélioration de l'intelligibilité des transmissions acoustiques sous-marines caractérisé par le fait qu'il comprend, sur son canal d'émission, des moyens d'étalement temporel du signal à émettre par un facteur prédéterminé et, sur son canal de réception, des moyens de compression temporelle du signal reçu par un facteur inverse.

Dans un mode de réalisation particulier, les moyens d'étalement temporel et les moyens de compression temporelle comprennent des moyens d'échantillonnage et de numérisation, une mémoire numérique, et des moyens de dénumérisation et de déséchantillonnage.

Le dispositif selon l'invention peut, en outre, comprendre des moyens de transposition en fréquence du signal à émettre et du signal reçu, comprenant eux-mêmes, par exemple, des moyens pour moduler une porteuse et un filtre susceptible d'éliminer une des bandes latérales résultant de la modulation.

La fréquence de la porteuse est de préférence réglable afin de permettre une correction par l'opérateur du glissement en fréquences dû à l'effet Doppler.

On décrira maintenant à titre d'exemple non limitatif un mode de réalisation particulier de l'invention en référence aux dessins annexés dans lesquels :

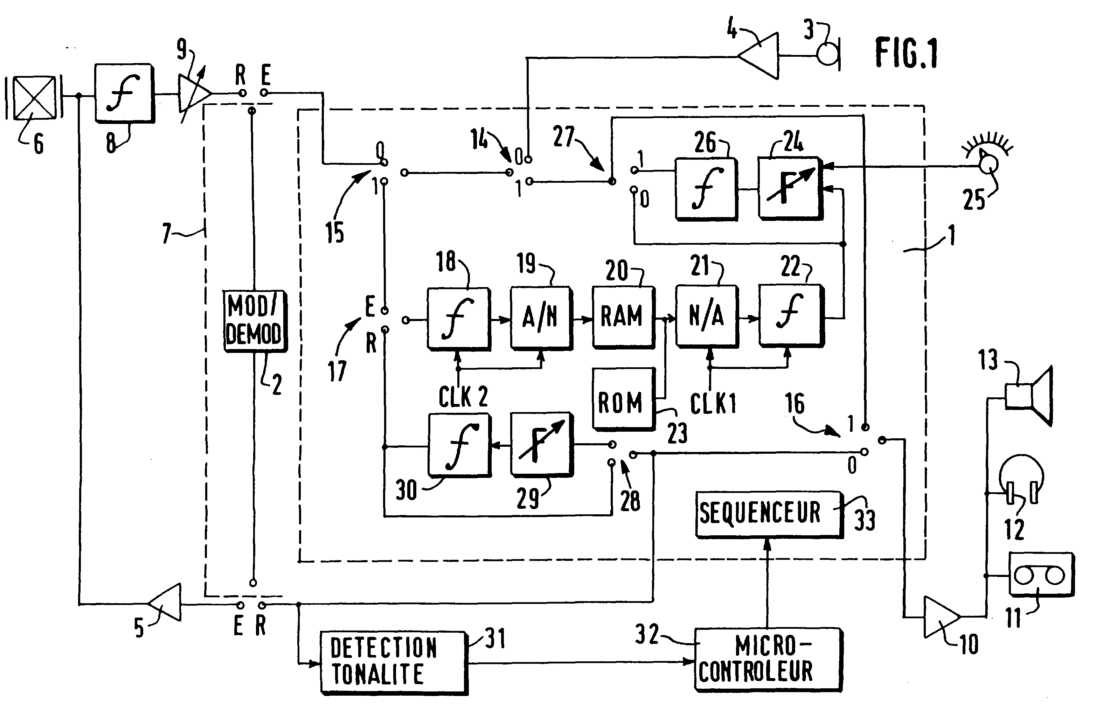

- la fig. 1 est un schéma d'un dispositif selon l'invention et ;
- les figs. 2a à 2f représentent les transpositions successives de spectre fréquentiel subies par le signal à l'émission, à la réception et à la relecture.

Le dispositif 1 selon l'invention est conçu pour pouvoir être utilisé avec des systèmes émetteurs-récepteurs acoustiques sous-marins du type connu, tels que des téléphones.

Un tel système comprend un modulateur-démodulateur 2 permettant, en émission, de moduler une porteuse de fréquence comprise entre, par exemple, 3,6 et 45 kHz à l'aide d'un signal incident provenant d'un microphone 3 et amplifié dans un amplificateur 4. Le spectre de fréquences du signal provenant du microphone est, de façon classique, compris dans la bande 500/3000 Hz. Le signal modulé est de nouveau amplifié dans un amplificateur 5 puis émis par un transducteur 6.

En réception, le double commutateur 7 est basculé de sorte que le signal reçu est tout d'abord filtré dans un filtre 8 avant d'être amplifié dans un amplificateur 9 à gain variable, de nouveau amplifié dans un amplificateur de puissance 10 et enfin dirigé sur un enregistreur à bande 11, un casque d'écoute 12 ou un haut-parleur 13.

Le dispositif 1 comprend, en entrée, deux commutateurs à deux positions 14 et 15 et, en sortie, un commutateur à deux positions 16 qui, lorsqu'ils sont en position O rendent le dispositif transparent. Dans cette configuration, la sortie amplifiée du microphone 3 est directement appliquée à l'entrée de modulation du modulateur-démodulateur 2, tandis que sa sortie de démodulation est directement amplifiée et appliquée à l'entrée des appareils 11, 12 et 13.

En revanche, lorsque l'un au moins des commutateurs 15 et 16 ou le commutateur 17 sont en position 1, le dispositif est en service.

Par l'intermédiaire du commutateur 14 en position O et du commutateur 15 en position 1, le signal issu de l'amplificateur 4 est appliqué à l'entrée enregistrement E d'un commutateur 17 dont la sortie est appliquée en entrée d'un filtre analogique passe-bas 18. La fréquence de coupure du filtre 18 est une fonction de CLK2, fréquence d'échantillonnage dans un convertisseur analogique-numérique 19 à l'entrée duquel est appliquée la sortie du filtre 18. En fait, la fréquence de coupure du filtre 18 est inférieure à la moitié de la fréquence d'échantillonnage dans le convertisseur 19 afin de respecter la condition du théorème de Shannon.

La sortie du convertisseur 19 est ensuite mémorisée dans une mémoire RAM 20. A titre d'exemple, si le convertisseur 19 échantillonne à 32 kHz sur 12 bits, et que l'on effectue une compression sur 4 bits, le signal d'entrée dans la mémoire 20 est à 128 Kbauds, d'où il résulte qu'une mémoire de 4 Mbits permet de stocker 30 secondes de parole.

La sortie de la mémoire RAM 20 est appliquée à l'entrée d'un convertisseur numérique/analogique 21 suivi d'un filtre passe-bas 22 dont la fréquence de coupure est commandée par la fréquence CLK1 de dénumérisation dans le convertisseur 21. Cette fréquence de dénumérisation peut être égale à la fréquence de numérisation dans le convertisseur 19, soit 32 kHz dans l'exemple précité, ou à un sous-multiple de cette fréquence, par exemple 16 kHz, 8 kHz et 4kHz, ce qui définit un facteur d'étalement respectivement égal à 2, 4 ou 8, rapport de la fréquence de la numérisation dans le convertisseur 19 à la fréquence de dénumérisa-tion dans le convertisseur 21.

Une mémoire ROM non volatile 23 est connectée en parallèle sur la mémoire RAM 20. Des messages prédifinis et couramment utilisés sont enregistrés au moyen d'un programmateur de mémoire classique dans cette mémoire 23.

Ces messages sont sélectionnables à la demande par l'opérateur qui se trouve ainsi déchargé de la création de ces messages. Ceci est particulièrement intéressant pour l'émission cyclique de messages entrant par exemple dans des procédures de sécurité. L'opérateur, jusqu'à présent condamné à émettre par exemple toutes les trois minutes un message de quelques secondes, et ceci 24 heures sur 24 pendant plusieurs jours, peut confier cette tâche au dispositif qui, par l'intermédiaire du séquenceur qui sera décrit ci-après, génère la même opération de façon totalement automatique et sans risque d'oubli.

La sortie du filtre 22 est appliquée en entrée d'un modulateur 24. La fréquence porteuse F_{P} modulée dans le modulateur 24 peut être choisie parmi une pluralité de valeurs en fonction du facteur d'étalement N. Elle est également ajustable à l'aide d'un bouton 25 directement accessible par l'opérateur.

Le spectre de fréquence du signal de sortie du modulateur 24 comporte donc deux bandes latérales centrées sur la fréquence Fp. Ce signal de sortie est appliqué en entrée d'un filtre passe-bas 26 permettant d'éliminer la bande latérale supérieure.

L'ensemble constitué par le modulateur 24 et le filtre 26 peut être mis hors circuit à l'aide d'un interrupteur 27 en position 0. Cet interrupteur 27 permet également, en position 1, de relier la sortie du filtre 26 à l'entrée 1 du commutateur 14 et par la sortie O du commutateur 15, à l'entrée émission E du modulateur/démodulateur 2.

Enfin, la sortie du commutateur 27 est reliée à l'entrée 1 du commutateur 16.

La sortie réception R du modulateur/démodulateur 2 est appliquée, par l'intermédiaire du commutateur 28, à l'entrée d'un modulateur 29 dont la sortie est appliquée à l'entrée d'un filtre 30. Dans le modulateur 29, le signal reçu sert à moduler une fréquence porteuse F_{P1} choisie en fonction du facteur d'étalement du signal reçu. Le filtre 30 permet ensuite d'éliminer la bande latérale supérieure du spectre de fréquence.

Le facteur d'étalement est codé au début du message reçu et détecté dans un détecteur de tonalité 31 qui le communique à un micro-contrôleur 32. A son tour, le micro-contrôleur commande un séquenceur 33 assurant de toute manière convenable le fonctionnement automatique du dispositif.

Le commutateur 28 permet de mettre hors circuit le filtre 30 et le modulateur 29. Dans le cas contraire, la sortie du filtre 30 est appliquée à l'entrée réception R du commutateur 17.

Lorsque l'on souhaite émettre un message, celui-ci est préalablement mémorisé dans la mémoire 20. A cet effet, le commutateur 14 est mis en position O, le commutateur 15 en position 1 et le commutateur 17 en position E. Le message est énoncé dans le microphone 3 et est alors numérisé dans le convertisseur 19 et stocké dans la mémoire 20.

En dénumérisant ce message dans le convertisseur 21 à la même fréquence que celle de sa numérisation, l'opérateur peut écouter ce message afin de le vérifier préalablement à son émission, en plaçant le commutateur 27 en position 0 et le commutateur 16 en position 1.

Si l'opérateur souhaite émettre le message, il choisit le facteur d'étalement en fonction des conditions de fonctionnement. Le signal dénumérisé est éventuellement transposé en fréquence dans le modulateur 24 et le filtre 26, puis émis à travers les commutateurs 27 (position 1), 14 (position 1) et 15 (position 0).

A la réception, le signal est éventuellement transposé en fréquence dans le modulateur 29 et le filtre 30 puis, le commutateur 17 étant en position réception, le signal est échantillonné et numérisé dans le convertisseur 19 à la fréquence à laquelle il a été dénumérisé dans le convertisseur 21 du système émetteur.

Ce signal est ainsi stocké dans la mémoire RAM 20. Il peut être relu en le dénumérisant dans le convertisseur 21 à la fréquence à laquelle il a été échantillonné dans le convertisseur 19 du système émetteur.

Le tableau ci-dessous illustre ce fonctionnement avec un facteur d'étalement N égal respectivement à 1, 2, 4, 8. Toutes les entrées de ce tableau sont exprimées en Hz sauf les fréquences d'échantillonnage et de déséchantillonnage qui sont exprimées en kHz.

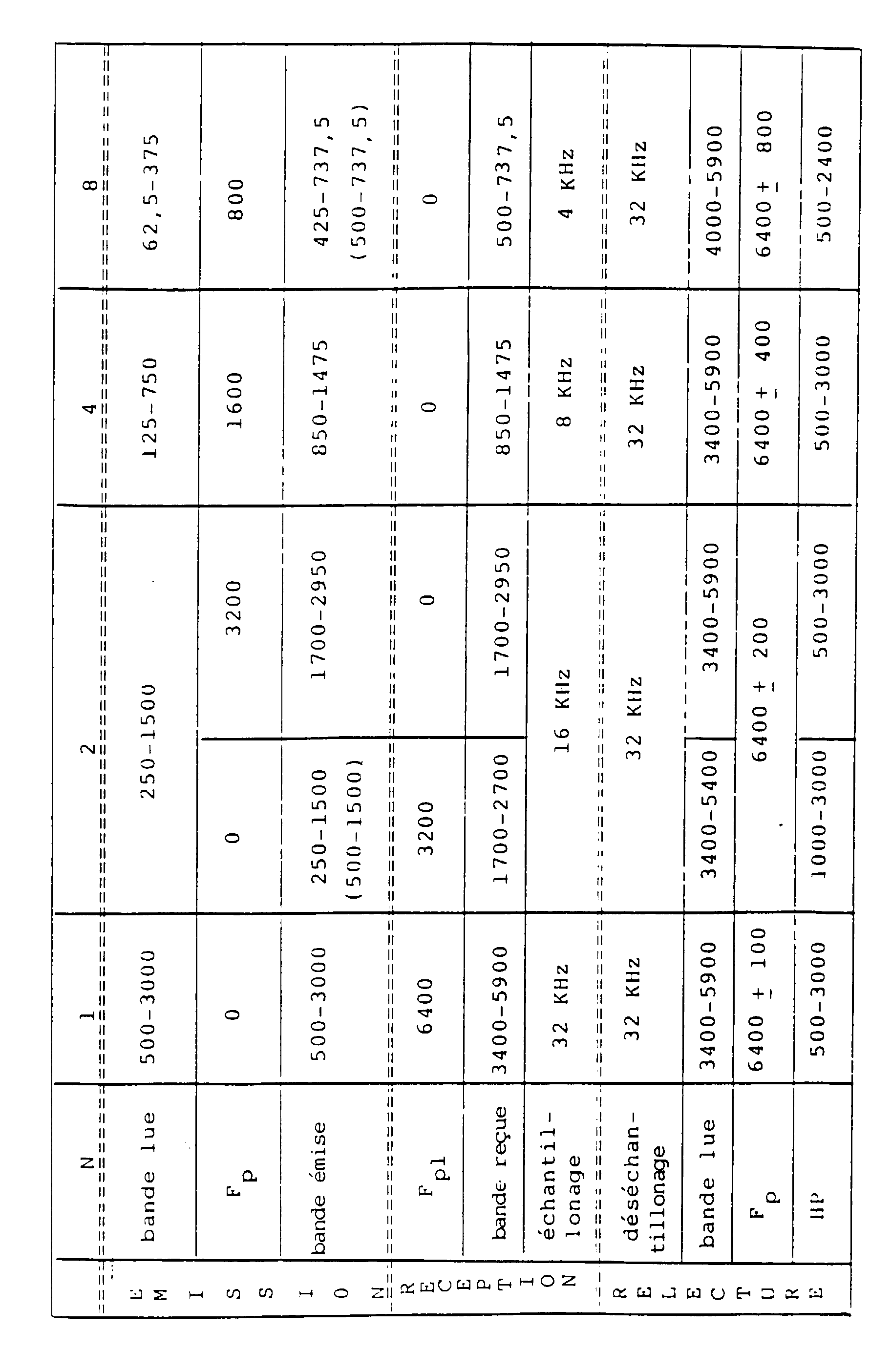

Le cas N = 2 se divise lui-même en deux sous-cas selon que la fréquence porteuse du modulateur/démodulateur 2 impose ou non une bande de transmission réduite.

En effet, dans le cas où cette fréquence porteuse est inférieure à 5 kHz, la bande passante est réduite de 500/3 000 Hz à 500/2 150 Hz.

Si dans ce cas on maintient le même mode de modulation à l'émission, le spectre 250/1 500 Hz devenant 1700/2 950 Hz, une grande partie de l'information est supprimée par les filtres du téléphone. Deux sous-cas sont donc prévus lorsque N = 2. Le choix du sous-cas est géré par le microcontrôleur, par la même commande qui sélectionne la largeur de bande du filtre en fonction de la fréquence porteuse.

On observera que l'utilisation d'une transmission dilatée (spectre compressé) permet de passer plus d'informations dans le cas où le téléphone travaille en bande réduite. C'est ainsi que pour N = 4, la totalité du spectre d'origine ( 500/3 000 Hz) peut être transmise dans un canal réduit 500/2 150 Hz, sans perdre les informations contenus dans les aigües (2150 à 3000 Hz), informations qui seraient perdues lors d'une transmission normale (N = 1).

Lors de la mémorisation préalable à l'émission, l'échantillonnage dans le convertisseur 19 s'effectue dans tous les cas à 32 kHz. Le déséchantillonnage à l'émission dans le convertisseur 21 s'effectue selon que le facteur d'étalement est égal à 1, 2, 4 ou 8, respectivement à 32, 16, 8 ou 4 kHz. Il en résulte, au niveau de la sortie du filtre 22, un signal dont la bande de fréquences (bande lue) est indiqué dans la deuxième ligne du tableau.

Le signal est ensuite éventuellement transposé en fréquence afin de le rendre compatible avec le système émetteur dont la bande passante est, de façon classique, comprise entre 500 et 3 000 Hz. Le signal n'est donc pas transposé en fréquence dans le cas où N = 1 et dans le premier sous-cas où N = 2. Dans ce sous-cas, une petite partie de l'information est perdue du fait que le signal lu était dans la bande 250/1500 Hz et que seule la partie 500/1 500 Hz de cette bande sera donc émise.

Dans l'autre sous-cas où N = 2 et lorsque N = 4 ou 8, le signal lu est transposé en fréquence dans le modulateur 24 et le filtre 26 avec des fréquences porteuses de, respectivement, 3200, 1600 et 800 Hz. Dans ces trois cas, seule la bande latérale inférieure est conservée. On observe que, lorsque N = 8, une très légère fraction de l'information est également perdue.

La quatrième ligne du tableau donne donc la bande de fréquence dans laquelle se situe le signal émis.

A la réception, le signal n'est pas transposé en fréquence dans le deuxième sous-cas où N = 2 ainsi que dans les cas où N est égal à 4 ou 8. En revanche, il est effectivement transposé dans le modulateur 29 et le filtre 30 dans le cas où N = 1 et dans le premier sous-cas où N = 2, la fréquence modulée étant, respectivement, de 6400 Hz et 3200 Hz afin de rendre le signal compatible avec les moyens d'échantillonage. Ici aussi, seule la bande latérale inférieure est conservée.

La sixième ligne du tableau indique donc la bande de fréquence du signal en entrée du filtre 18.

Ce signal est ensuite échantillonné à respectivement 32, 16, 8 et 4 kHz pour N égal à 1, 2, 4 et 8. Le signal ainsi échantillonné et numérisé est stocké dans la mémoire RAM 20.

Pour la relecture, le signal est extrait de la mémoire 20 et déséchantillonné à 32 kHz dans tous les cas.

La neuvième ligne du tableau montre donc la bande de fréquence du signal issu du filtre 22. Cette bande de fréquence est toujours de 3 400/5 900 Hz à l'exception du premier sous-cas où N égal 2 et du cas où N égal 8 où l'on constate de nouveau la légère perte d'informations précitée.

Afin de ramener le signal dans la bande de fréquences audible 500/3 000 Hz, il est retransposé dans le modulateur 24 où la fréquence modulée est de 6 400 Hz et dans le filtre 26 où la bande latérale supérieure est éliminée.

La dernière ligne du tableau montre les bandes de fréquence dans lesquelles se situe le signal en entrée, par exemple, du haut-parleur.

On voit à l'avant dernière ligne du tableau la fréquence Fₚ modulée dans le modulateur 24, et en fait ajustable de ± 100 Hz, ± 200 Hz, ± 400 Hz et ± 800 Hz, respectivement pour N = 1, 2, 4 et 8. L'ajustement de cette fréquence réalisé par l'opérateur à l'aide du bouton 25, permet d'annuler l'effet Doppler dû à une vitesse radiale relative non nulle entre l'émetteur et le récepteur.

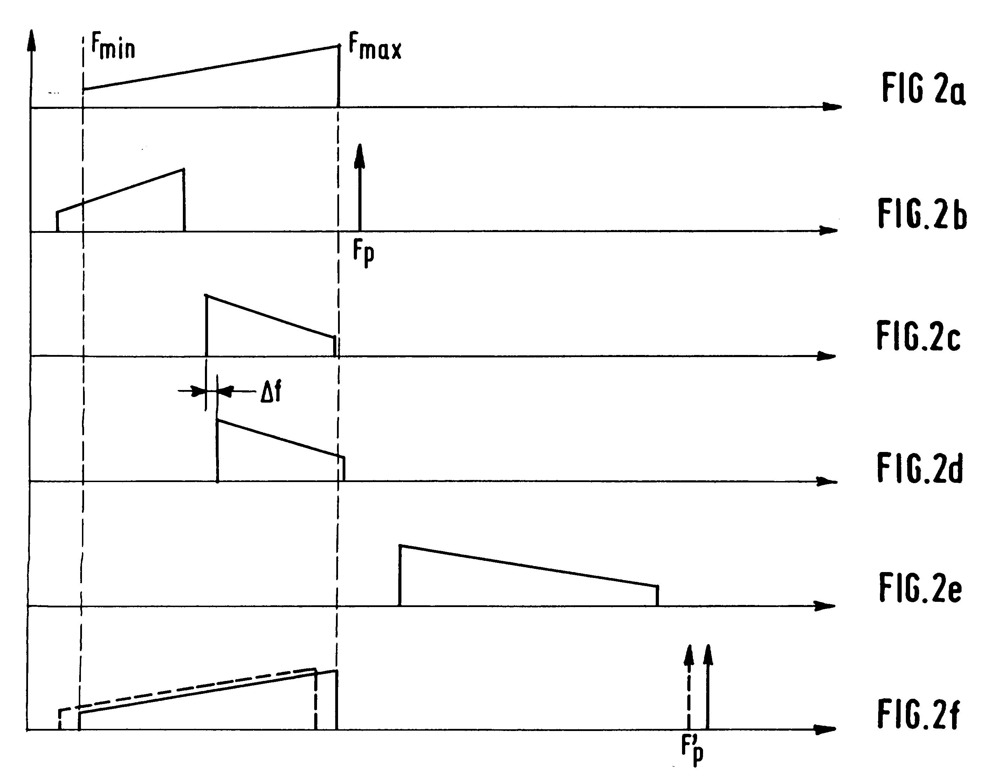

Les figs. 2 illustrent le deuxième sous-cas où N = 2.

On voit sur la fig. 2a le spectre de fréquence du signal issu du microphone 3 (500/3 000 Hz) (Fₘᵢₙ/Fₘₐₓ).

La fig. 2b montre le spectre du signal en sortie du filtre 22 après étalement temporel. Le signal est ensuite transposé en fréquence autour de la fréquence F_{P} dans le modulateur 24, seule la bande latérale inférieure représentée à la fig. 2c étant conservée dans le filtre 26. On voit que le spectre ainsi généré reste parfaitement compatible aves les capacités du canal de transmission utilisé (Fₘᵢₙ/Fₘₐₓ).

La fig. 2d représente le spectre du signal reçu par le récepteur distant décalé d'une fréquence Δ f dû à l'effet Doppler. La compression temporelle dans le convertisseur 19 conduit au spectre reétalé de la fig. 2e. Enfin, le signal est retransposé en fréquence dans le modulateur 24 et le filtre 26 autour de la fréquence ajustable F'p. La fig. 2f représente en traits interrompus le spectre obtenu pour F'p nominale et, en traits pleins, le spectre obtenu après ajustement de F'p par l'opérateur. Ce dernier spectre est identique à celui de départ de la fig. 2 (500/3 000 Hz).

## Revendications

1. Procédé de transmission acoustique sous-marine, caractérisé par le fait qu'à l'émission, le signal à émettre est préalablement échantillonné, numérisé et mémorisé, puis déséchantillonné et dénumérisé à une fréquence inférieure à la fréquence d'échantillonnage et ainsi émis sous forme analogique, et qu'à la réception, le signal est, de façon correspondante, échantillonné, numérisé et mémorisé à la fréquence précitée de déséchantillonnage et de dénumérisation, puis relu à la fréquence précitée d'échantillonnage.

2. Procédé selon la revendication 1, dans lequel le signal émis est, postérieurement à sa dénumérisation, transposé en fréquence dans une bande compatible avec l'émetteur.

3. Procédé selon la revendication 2, dans lequel la transposition en fréquence est effectuée par modulation d'une porteuse et émission en bande latérale unique.

4. Procédé selon l'une quelconque des revendications 1 à 3, dans lequel le signal reçu est, préalablement à son échantillonnage et à sa numérisation, transposé en fréquence dans une bande compatible avec les moyens de mémorisation.

5. Procédé selon la revendication 4, dans lequel la transposition est effectuée par modulation d'une porteuse, une seule des bandes latérales en résultant étant ensuite échantillonnée et numérisée.

6. Procédé selon l'une quelconque des revendications 1 à 5, dans lequel le signal relu est utilisé pour moduler une porteuse, une des bandes latérales en résultant formant le signal reconstitué.

7. Procédé selon la revendication 6, dans lequel la fréquence de la porteuse est réglable.

8. Dispositif pour l'amélioration de l'intelligibilité des transmissions acoustiques sous-marines, caractérisé par le fait qu'il comprend, sur son canal d'émission, des moyens (18-22) d'étalement temporel du signal à émettre, par un facteur prédéterminé, et, sur son canal de réception, des moyens (18-22) de compression temporelle du signal reçu par un facteur inverse.

9. Dispositif selon la revendication 8, dans lequel les moyens d'étalement temporel et les moyens de compression temporelle comprennent des moyens (19) d'échantillonnage et de numérisation, une mémoire numérique (20), et des moyens (21) de dénumérisation et de déséchantillonnage.

10. Dispositif selon l'une quelconque des revendications 8 et 9, comprenant en outre, des moyens (24, 26) de transposition en fréquence du signal à émettre.

11. Dispositif selon l'une quelconque des revendications 8 à 10, comprenant en outre, des moyens (29, 30) de transposition en fréquence du signal reçu.

12. Dispositif selon l'une quelconque des revendications 10 et 11, dans lequel les moyens de transposition en fréquence comprennent des moyens (24, 29) pour moduler une porteuse et un filtre (26, 30) susceptible d'éliminer une des bandes latérales résultant de la modulation.

13. Dispositif selon la revendication 12, comprenant des moyens 25 de réglage de la fréquence de la porteuse.

## Patentansprüche

1. Verfahren zur akustischen Unterwasserübertragung, dadurch gekennzeichnet, daß zum Senden das zu sendende Signal vorher abgetastet, digitalisiert und gespeichert wird, dann bei einer Frequenz unterhalb der Abtastfrequenz rückgebildet und in ein analoges Signal umgewandelt wird und so in analoger Form gesendet wird, und daß zum Empfangen das Signal in entsprechender Weise bei der vorgenannten Rückbildungs- und Analogumwandlungsfrequenz abgetastet, digitalisiert und gespeichert wird, dann bei der vorgenannten Abtastfrequenz erneut gelesen wird.

2. Verfahren nach Anspruch 1, wobei das gesendete Signal nach seiner Analogumwandlung in ein mit dem Sender kompatibles Band frequenzumgesetzt wird.

3. Verfahren nach Anspruch 2, wobei die Frequenzumsetzung durch Modulation einer Trägerwelle und Senden auf einem Einseitenband bewirkt wird.

4. Verfahren nach einem der Ansprüche 1 bis 3, wobei das empfangene Signal vor seiner Abtastung und seiner Digitalisierung in ein mit den Speichermitteln kompatibles Band frequenzumgesetzt wird.

5. Verfahren nach Anspruch 4, wobei die Umsetzung durch Modulation einer Trägerwelle bewirkt wird, wobei daraus ein einziges der Seitenbänder resultiert, welches dann abgetastet und digitalisiert wird.

6. Verfahren nach einem der Ansprüche 1 bis 5, wobei das erneut gelesene Signal zum Modulieren einer Trägerwelle verwendet wird, wobei daraus ein Band der Seitenbänder resultiert, das das rekonstruierte Signal bildet.

7. Verfahren nach Anspruch 6, wobei die Frequenz der Trägerwelle einstellbar ist.

8. Vorrichtung zum Verbessern von akustischen Unterwasserübertragungen, dadurch gekennzeichnet, daß sie auf ihrem Sendekanal Mittel (18-22) zum zeitlichen Verlängern des zu sendenden Signals um einen vorgegebenen Faktor aufweist, und auf ihrem Empfangskanal Mittel (18-22) zum zeitlichen Komprimieren des empfangenen Signals um einen inversen Faktor aufweist.

9. Vorrichtung nach Anspruch 8, wobei die Mittel zur zeitlichen Verlängerung und die Mittel zum zeitlichen Komprimieren Mittel (19) zum Abtasten und zum Digitalisieren, einen numerischen Speicher (20) und Mittel (21) zum Analogumwandeln und zum Rückbilden aufweisen.

10. Vorrichtung nach einem der Ansprüche 8 oder 9, die außerdem Mittel (24, 26) zur Frequenzumsetzung des zu sendenden Signals aufweist.

11. Vorrichtung nach einem der Ansprüche 8 bis 10, die ferner Mittel (29, 30) zur Frequenzumsetzung des empfangenen Signals aufweist.

12. Vorrichtung nach einem der Ansprüche 10 oder 11, wobei die Mittel zur Frequenzumsetzung Mittel (24, 29) zum Modulieren einer Trägerwelle und ein Filter (26, 30) aufweisen, das zum Entfernen eines der aus der Modulation resultierenden Seitenbänder geeignet ist.

13. Vorrichtung nach Anspruch 12, die Mittel (25) zum Einstellen der Frequenz der Trägerwelle aufweist.

## Claims

1. Method of acoustic undersea transmission, characterised by the fact that at the time of emission, the signal to be emitted is previously sampled, digitized and memorised, then desampled and de-digitized at a frequency lower than the sampling frequency and thus emitted in analog form and that at the time of reception, the signal is, in a corresponding manner, sampled, digitized and memorised at the said desampling and de-digitizing frequency, then re-read at the said sampling frequency.

2. Method according to Claim 1, in which the signal emitted is, subsequent to its de-digitization, transposed in frequency in a band compatible with the emitter.

3. Method according to Claim 2, in which the transposition of frequency is carried out by modulation of a carrier and emission on a single lateral band.

4. Method according to one of Claims 1 to 3, in which the signal received is, prior to its sampling and its digitization, transposed in frequency in a band compatible with the memorising means.

5. Method according to Claim 4, in which the transposition is carried out by modulation of a carrier, only one of the lateral bands resulting therefrom then being sampled and digitized.

6. Method according to one of Claims 1 to 5, in which the re-read signal is used to modulate a carrier, one of the lateral bands resulting therefrom forming the reconstituted signal.

7. Method according to Claim 6, in which the frequency of the carrier is adjustable.

8. Device for improving the intelligibility of acoustic undersea transmissions, characterised by the fact that it comprises, on its emission channel, means (18-22) for spreading over time of the signal to be emitted, by a predetermined factor, and, on its reception channel, means (18-22) for compressing over time the signal received by an inverse factor.

9. Device according to Claim 8, in which the means for spreading over time and the means for compression over time comprise sampling and digitization means (19), a digital memory (20) and means (21) for de-digitization and de-sampling.

10. Device according to one of Claims 8 and 9, furthermore comprising, means (24, 26) for the transposition of frequency of the signal to be emitted.

11. Device according to one of Claims 8 to 10, furthermore comprising means (29, 30) for the transposition of frequency of the signal received.

12. Device according to one of Claims 10 and 11, in which the means for transposition of frequency comprise means (24, 29) for modulating a carrier and a filter (26, 30) able to eliminate one of the lateral bands resulting from the modulation.

13. Device according to Claim 12, comprising means (25) for regulating the frequency of the carrier.
